# EUROPÄISCHE PATENTANMELDUNG

(11) **EP 0 708 132 A1**
(43) Veröffentlichungstag der Anmeldung: **24.04.1996**
(21) Anmeldenummer: 95116375.7
(22) Anmeldetag: 17.10.1995
(51) Int. Cl.: C08J 3/22

(54) **Organische Peroxide enthaltende Masterbatch-Zusammensetzung**

(30) Priorität: 19.10.1994 DE 4437465
(71) Anmelder: Peroxid-Chemie GmbH, D-82049 Pullach (DE)
(72) Erfinder: Sienel, Günter, Dr., D-82067 Ebenhausen (DE); Dorn, Maximilian, Dr., D-82031 Grünwald (DE); Zimmermann, Heinz, Dr., D-81477 München (DE)
(74) Vertreter: Böhm, Brigitte, Dipl.-Chem., Dr.

(57) **Zusammenfassung**

Es wird eine Masterbatch-Zusammensetzung auf der Basis elastomerer Träger beschrieben, umfassend ein organisches Peroxid, einen Weichmacher und einen Füllstoff und gegebenenfalls weitere mit dem organischen Peroxid kompatible Additive, die dadurch gekennzeichnet ist, daß sie zusätzlich zum elastomeren Träger ein trans-Polyoctenamer enthält. Aufgrund ihrer Eigenschaften und ihrer leichten und sicheren Herstellbarkeit eignet sich diese Zusammensetzung sehr gut als Modifikationsmittel, und insbesondere als Vernetzungsinitiator zur Weiterverarbeitung von elastomeren Mischungen.

## Beschreibung

Die Erfindung betrifft Masterbatch-Zusammensetzungen auf der Basis elastomerer Träger umfassend ein organisches Peroxid, einen Weichmacher und einen Füllstoff und gegebenenfalls weitere mit dem organischen Peroxid kompatible Additive.

Masterbatch ist eine in der Kautschuk- und Kunststoffindustrie viel benutzte Bezeichnung für Vor- oder Stammischungen von Zusatzstoffen, wie z.B. Antioxidantien, Inhibitoren, Mastikationshilfsmitteln usw. in konzentrierten Kautschuk- oder Kunststoffmischungen. In Form von Masterbatch-Zusammensetzungen lassen sich die zur Weiterverarbeitung notwendigen, aber oft in geringen Mengen vorliegenden Additive leichter dosieren und homogen einarbeiten.

Die Masterbatch-Zusammensetzungen, die verschiedene Zusatzstoffe, wie z.B. organische Vernetzungsperoxide, enthalten, die dadurch leichter dosierbar und homogen verarbeitbar sind, sollen verschiedene Anforderungen erfüllen: sie sollen z.B., unabhängig von der Art des elastomeren Trägers und der Art des organischen Peroxids (in fester oder flüssiger Form) leicht und sicher herstellbar und verarbeitbar sein, sollen auch bei einem hohen Füllstoffanteil eine gute Elastizität und Einmischbarkeit in Elasten der Gummiindustrie zeigen, und sollen nicht ausblühen (Migration der Zusatzstoffe, z.B. des Peroxids, an die Oberfläche), und sollen lagerstabil sein.

Nach der DE-A-2123214 werden Kautschukchemikalien in Form granulierter Mischungen aus Elastomeren, den jeweiligen Kautschukchemikalien und gegebenenfalls Dispergatoren eingesetzt. Durch die Verwendung in Form granulierter Mischungen sollen diese Masterbatch-Zusammensetzungen gut einmischbar sein, und Belästigungen durch Staub und Geruch werden vermieden.

Die EP-A-0423639 und die US-A-5238978 beschreiben Masterbatch-Zusammensetzungen, in denen 10 bis 70 Gewichtsprozent eines organischen Peroxids homogen in einem Polycaprolacton-Träger dispergiert sind.

Aufgabenstellung der vorliegenden Erfindung war es, Masterbatch-Zusammensetzungen bereitzustellen, die sich auf einfache und sichere Weise unter Verwendung von für derartige Zusammensetzungen bekannten üblichen Apparaturen, wie z.B. Knetern, herstellen lassen, und mit denen möglichst viele der für derartige Masterbatch-Produkte gewünschten Eigenschaften erhalten werden können. Diese Aufgabenstellung wird mit der vorliegenden Erfindung gelöst.

Gegenstand der Erfindung ist eine Masterbatch-Zusammensetzung nach Patentanspruch 1 auf der Basis elastomerer Träger, umfassend ein organisches Peroxid, einen Weichmacher und einen Füllstoff und gegebenenfalls weitere mit dem organischen Peroxid kompatible Additive, die dadurch gekennzeichnet ist, daß sie zusätzlich zum elastomeren Träger ein trans-Polyoctenamer enthält.

Zweckmäßige Ausführungsformen davon sind Gegenstand der Patentansprüche 2 bis 13.

Weiterer Gegenstand der Erfindung ist ein Verfahren gemäß Patentanspruch 14 zur Herstellung einer erfindungsgemäßen Masterbatch-Zusammensetzung, bei dem (a) den elastomeren Träger, das Polyoctenamer, den Weichmacher und gegebenenfalls einen Teil des Füllstoffes oder des Füllstoffgemisches homogen vermischt und danach (b) den Füllstoff oder das Füllstoffgemisch oder gegebenenfalls die Restmenge davon zusammen mit dem Peroxid bei einer Temperatur unterhalb der Zersetzungstemperatur des Peroxids einarbeitet.

Zweckmäßige Ausführungsformen dieses Verfahrens sind Gegenstand der Patentansprüche 15 bis 19.

Es hat sich überraschenderweise gezeigt, daß mit den erfindungsgemäßen Masterbatch-Zusammensetzungen, die eine Kombination des elastomeren Trägers mit trans-Polyoctenamer aufweisen, eine Kombination von Eigenschaften erhalten werden kann, die sie für die Verwendung in insbesondere Kautschukmischungen sehr gut geeignet machen, und die auf einfache und sichere Weise hergestellt werden können.

So zeigen die erfindungsgemäßen Masterbatch-Zusammensetzungen trotz hoher Füllstoffanteile eine ausreichende Elastizität, und damit gute Handhabbarkeit, z.B. in Granulatform, und eine gute Einmischbarkeit in Elaste der Kautschukindustrie. Sie blühen nicht aus, d.h. es findet keine Migration der Zusatzstoffe, insbesondere des Peroxids, oder von Füllstoffen wie z.B. Kreide oder Kieselsäure, die eine weiße Farbe verleihen, an die Oberfläche der z.B. als Granulat, Streifen oder Walzfellen vorliegenden Zusammensetzungen statt; als elastomerer Träger lassen sich im wesentlichen alle Kautschukelastomere, und insbesondere auch kaltfließender Kautschuk, z.B. kaltfließendes EPDM, einsetzen; die Zusammensetzungen und deren Herstellbarkeit sind unabhängig vom Aggregatzustand des organischen Peroxids (fest oder flüssig); unter Verwendung geeigneter Füllstoffe, wie z.B. von Kreide und/oder Kieselsäure lassen sich auch rein weiße und einen hohen Peroxidgehalt aufweisende Zusammensetzungen herstellen, die leicht durch mit den Peroxiden verträgliche Farbstoffen eingefärbt werden können; die Zusammensetzungen sind äußerst lagerstabil; und sie lassen sich auf einfache, sichere und wirtschaftliche Weise unter Verwendung üblicher Apparaturen, wie z.B. von hierfür üblichen Knetern und Walzen ohne zwingende Vorcompoundierung herstellen.

Vorzugsweise wird als organisches Peroxid mit Hinblick auf den Verwendungszweck der erfindungsgemäßen Masterbatch-Zusammensetzungen zur Modifizierung von Polymeren, insbesondere von Kautschuken durch Vernetzung, ein sogenanntes Vernetzungsperoxid, d.h. ein als Vernetzungsinitiator wirkendes Peroxid eingesetzt. Solche Peroxide sind insbesondere Peroxide ausgewählt aus der Gruppe 2,5-Dimethylhexan-2,5-di-tert.butylperoxid (DHBP), Dicumylperoxid (DCUP), 2,5-Dimethyl-2,5-di-(t-butylperoxy)hexin-3(DYBP), Di-(2-t-butylperoxy-isopropyl)benzol (DIPP), Di-(t-butyl)peroxid (DTBP) und/oder t-Butylcumyl-peroxid (BCUP) oder/und Perketale, wie 1,1-Bis(t-butylperoxy)-3,3,5-trimethylcyclohexan (TMCH), n-Butyl-4,4-bis-(t-butylperoxy)valerat (NBV) oder/und Ethyl-3,3-bis(t-butylperoxy)butyrat (EBU). Es können auch zwei oder mehrere Peroxide in Mischung verwendet werden.

Die Peroxide werden vorzugsweise in einer Menge von 30 bis 50 Gew.-%, und insbesondere in einer Menge von 40 bis 45 Gew.-%, bezogen auf die gesamte Masterbatch-Zusammensetzung, eingesetzt. Als elastomerer Träger für die erfindungsgemäße Masterbatch-Zusammensetzung eignen sich grundsätzlich alle Elastomere, insbesondere Kautschuke, und insbesondere solche, die für Masterbatch-Zusammensetzungen üblicherweise verwendet werden. Solche Elastomere sind z.B. Acrylnitril-Butadien-Kautschuk (NBR), Chloropren-Kautschuk (CR), Butylkautschuk (IIR), Urethan-Kautschuk (AU Polyesterbasis, EU Polyesterbasis), Silicon-Kautschuk (Si), Fluorcarbon-Kautschuk (CFM, FPM), Chlorsulfoniertes Polyethylen (CSM), Acrylat-Kautschuk (ANM, ACM), Butadien-Vinylpyridin-Kautschuk (PBR), Carboxylat-Kautschuk, Epichlorhydrin-Kautschuk (CO, ECO), Propylenoxid-Kautschuk (PO), Ethylen-Vinylacetat-Copolymere (EVA, EVM), Ethylen-Propylen-Kautschuk (EPM, EPDM), Polysulfidkautschuk (TM), Thermoplastischer Kautschuk (TPE) und Polyesterkautschuk. Es können auch Mischungen von zwei oder mehreren der Elastomeren eingesetzt werden. Geeignete Elastomere sind z.B. die von W. Kleemann "Mischungen für die Elastverarbeitung", VEB Deutscher Verlag für Grundstoffindustrie, Leipzig 1982, Seite 80 bis 116 beschriebenen Spezialkautschuke.

Als erfindungsgemäß besonders bevorzugte Elastomere sind zu nennen Ethylen-Propylen-Dien-Terpolymere (EPDM) und Ethylen-Vinylacetat-Polymere (EVA, EVM).

Im Hinblick auf eine Kostenreduzierung ist vor allem die Verwendung von kaltfließendem Kautschuk, z.B. kaltfließendem EPDM, zweckmäßig, weil sich dadurch in der Regel der Anteil an Füllstoffen erhöhen läßt.

Als Weichmacher können im Prinzip alle für Elastomer- (Kautschuk) Mischungen üblichen Weichmacher verwendet werden (vgl. z.B. W. Kleemann, l.c., Seite 117 bis 130); die Weichmacher müssen nur die Bedingung erfüllen, daß die Masterbatch-Zusammensetzungen formbar bleiben. Erfindungsgemäß besonders bevorzugte Weichmacher sind n-Alkylbenzole, die z.B. unter dem Handelsnamen Marlican^{R} (Hüls Aktiengesellschaft) vertrieben werden.

Als Füllstoffe können ebenfalls im Prinzip alle für Elastomer-Mischungen (Polyblends) verwendeten Füllstoffe eingesetzt werden (vgl. z.B. W. Kleemann, l.c., Seite 131 bis 180). Als besonders zweckmäßig haben sich hierfür Kreide und Kieselsäure, sowie deren Gemische, erwiesen; diese Füllstoffe besitzen den Vorteil, daß sie zu einer weißen Farbe führen, was zu einer besseren einheitlichen Erscheinungsform und einer besseren Einfärbbarkeit durch mit Peroxid verträglichen Farbstoffen führt.

Die zweckmäßigste Auswahl von Weichmachern und/oder Füllstoffen kann sich auch nach den übrigen Bestandteilen richten. So ist z.B. Kieselsäure als Füllstoff für die Verwendung von flüssigen Peroxiden günstiger, da damit eine bessere Aufsaugwirkung erzielt werden kann, während in den übrigen Fällen in der Regel Calciumcarbonat (Kreide, wie z.B. das unter der Handelsbezeichnung Socal® (Solvay & Co.) vertriebene Produkt) als Füllstoff zur Erzielung weißer Farben vorgezogen wird, oder zumindest einen Teil des Füllstoffs darstellt, z.B. in Mischung mit Kieselsäure.

Um eine Zersetzung des in den Masterbatch-Zusammensetzungen enthaltenden Peroxids zu vermeiden, sind diese Zusammensetzungen zweckmäßigerweise schwermetallfrei; auf diese Weise kommt der Temperaturüberwachung nicht mehr die kritische Bedeutung zu, weil durch die Anwesenheit von Schwermetallen in den Zusammensetzungen die Temperatur, bei der sich die Peroxide zersetzen können, wesentlich erniedrigt sein kann.

Die erfindungsgemäße Masterbatch-Zusammensetzung kann auch noch weitere, mit den organischen Peroxiden kompatible Additive enthalten; solche Additive sind z.B. für Elastomer (Kautschuk) Mischungen verwendete übliche Kautschukchemikalien, wie z.B. Antioxidantien, Anti-Ozonmittel, antistatische Mittel, Farbstoffe, Pigmente, optische Aufheller, Hitzestabilisatoren, Lichtstabilisatoren, Flammfestmacher, Vernetzungsbeschleuniger, sowie Mischungen davon. Diese Additive werden vorzugsweise in einer für derartige Zusätze üblichen Menge verwendet, und insbesondere in einer Menge, die zu keiner wesentlichen Zersetzung der Peroxide führt.

In den erfindungsgemäßen Masterbatch-Zusammensetzungen liegt das Verhältnis (in Gewichtteilen) elastomerer Träger/Polyoctenamer vorzugsweise im Bereich von 1/3 bis 3/1. Das zweckmäßigste Verhältnis richtet sich insbesondere auch nach der Art des als Träger verwendeten Elastomeren (Kautschuk); in der Regel werden aber außerhalb des bevorzugten genannten Bereiches im Hinblick auf die Eigenschaften und/oder die Wirtschaftlichkeit der Masterbatch-Zusammensetzungen schlechtere Ergebnisse erhalten.

Die Menge des Füllstoffs oder des Füllstoffgemisches liegt zweckmäßigerweise im Bereich von 25 bis 50 Gew.-%, bezogen auf die gesamte Masterbatch-Zusammensetzung. Aus wirtschaftlichen Gründen kann es dabei zweckmäßig sein, möglichst viel Füllstoff im Verhältnis zu möglichst wenig Elastomer (Kautschuk) einzusetzen, weil die Elastomerkomponente im Vergleich zu Füllstoff in der Regel wesentlich teurer ist.

Die erfindunsgemäßen Masterbatch-Zusammensetzungen werden vorzugsweise in Form von Walzfellen, in Streifen geschnittenen Walzfellen oder insbesondere in granulierter Form gelagert und vertrieben, und werden zweckmäßigerweise als Granulat verwendet.

Die Herstellung der erfindungsgemäßen Masterbatch-Produkte kann in der Regel nach einem hierfür geeigneten zur Herstellung von Polymerblends auf Elastomer (Kautschuk)-Basis üblichen Verfahren erfolgen.

In einem besonders zweckmäßigen Verfahren zur Herstellung der erfindungsgemäßen Masterbatch-Produkte wird (a) der elastomere Träger, das Polyoctenamer, der Weichmacher und gegebenenfalls ein Teil der Füllstoffe oder des Füllstoffgemisches homogen vermischt und danach (b) der Füllstoff oder das Füllstoffgemisch, oder gegebenenfalls die Restmenge davon, zusammen mit dem Peroxid bei einer Temperatur unterhalb der Zersetzungstemperatur des Peroxids in die nach (a) erhaltene Mischung eingearbeitet.

Bei diesem Verfahren hat es sich als vorteilhaft erwiesen, bei Verwendung von Ethylen-Vinylacetat-Copolymer (EVA) als elastomerer Träger und einem organischen Peroxid in flüssiger Form das EVA mit bis zu 30 %, und vorzugsweise mit ca. 30 Gew.-%, des flüssigen Peroxids vorquellen zu lassen, und das so vorgequollene EVA dann in der Verfahrensstufe (a) einzusetzen.

Die Temperatur, bei der die Peroxide eingearbeitet werden (Verfahrensstufe (b)) ist so zu wählen, daß das Elastomer (Kautschuk) elastisch bleibt (bei zu niedrigen Temperaturen kann die Zusammensetzung unerwünschterweise grießartig werden), auf der anderen Seite aber auch keine Zersetzung des Peroxids stattfindet (was bei zu hohen Temperaturen der Fall sein könnte); die Temperatur wird deshalb zweckmäßigerweise so gewählt, daß sie möglichst weit unterhalb der Selbstzersetzungstemperatur des Peroxids liegt, aber noch in einem Temperaturbereich, in dem das Elastomer elastisch bleibt. Vorzugsweise liegt diese Temperatur im Bereich von 50 bis 60°C, und insbesondere bei 50 bis 55°C. Die Temperaturkontrolle in der Verfahrensstufe (b) kann zweckmäßigerweise z.B. mittels in Knetern vorhandenen Thermosonden durchgeführt werden.

Die Verfahrensstufe (a) und/oder (b) kann in dafür geeigneten üblichen Knetern (z.B. einem Doppelmantelkneter) durchgeführt werden. Nach der Verfahrensstufe (b) wird die Mischung vorzugsweise, z.B. mittels einer dafür geeigneten Preßwalze, zu Walzfellen verarbeitet und mittels eines Granulators in ein Granulat überführt.

Unter Beachtung der erfindungsgemäßen Verfahrensbedingungen lassen sich die Masterbatch-Zusammensetzungen auf einfache, wirtschaftliche und sichere Weise herstellen. Die erfindungsgemäßen Masterbatch-Zusammensetzungen stellen deshalb und aufgrund ihrer vorstehenden angegebenen vorteilhaften Eigenschaftkombination zur Verwendung als Modifikationsmittel, und insbesondere als Vernetzungsinitiator für Polymere (insbesondere Elastomere) geeignete Masterbatch-Zusammensetzungen dar.

Die nachfolgenden Beispiele sollen die Erfindung näher erläutern, ohne sie darauf zu beschränken.

Wenn nicht anders angegeben, beziehen sie Mengen- und Prozentangaben auf das Gewicht, und Temperaturangaben auf die Celsiusskala.

### Beispiele

### Beispiel 1

### Herstellung einer erfindungsgemäßen Masterbatch-Zusammensetzung unter Verwendung eines festen Peroxids

(a) In einem auf 70 bis 75°C aufgeheizten Doppelmantelkneter werden EPDM, trans-Polyoctenamer und Weichmacher (n-Alkylbenzol) vorgelegt und bis zur Homogenität gemischt; zu dieser Mischung werden 30 % des für die Zusammensetzung vorgesehenen Füllstoffes oder Füllstoffgemisches bis zum Erhalt einer homogenen Mischung eingearbeitet.
(b) Die Temperatur des in Stufe (a) verwendeten Kneters wird durch Kühlen oder Heizen auf 60°C eingestellt. Danach wird die restliche Menge des Füllstoffes oder Füllstoffgemisches synchron mit dem organischen Peroxid so zudosiert, daß eine Temperatur von 50 bis 55°C aufrechterhalten wird. Nach der Homogenisierung der Mischung wird die erhaltene Masse bei 20 bis 30°C manuell oder mechanisch aus dem Kneter ausgetragen und mittels einer Preßwalze zu beliebig dicken Walzfellen ausgewalzt. Nach dem Erkalten können die Walzfelle in Streifen geschnitten und/oder granuliert werden.

### Beispiel 2

### Herstellung von erfindungsgemäßen Masterbatch-Zusammensetzungen mit EVA als Trägermaterial unter Verwendung flüssiger organischer Peroxide

(a) In dem in Beispiel 1 verwendeten Kneter wird EVA als Granulat vorgelegt und bei einer Temperatur von < 60°C mit ca. 30 % des flüssigen Peroxids während 1.5 Stunden quellen gelassen (diese Vorbehandlung des EVA kann auch außerhalb des in der nachfolgenden Stufe (b) verwendeten Kneters in einem davon getrennten Gefäß durchgeführt werden).
(b) Die Temperatur des nach (a) erhaltenen Kneterinhaltes wird auf 50 bis 60°C eingestellt und dann das trans-Polyoctenamer und Weichmacher (n-Alkylbenzol) bis zur Homogenität zugemischt. Dann werden unter Temperaturkontrolle der Füllstoff oder das Füllstoffgemisch und die Restmenge des Peroxids synchron unter ständigem Kneten zudosiert. Nach Erhalt einer homogenen Masse wird die Mischung dann wie im Beispiel 1 (b) beschrieben zu einem Walzfell ausgewalzt und/oder granuliert.

In der Tabelle 1 ist ein erfindungsgemäßer Masterbatch-Ansatz (auf Basis von EVA als elastomerer Träger und DYBP als flüssiges Peroxid; 7 l Kneter, Batch = 2600 g) angegeben, der nach dem Verfahren von Beispiel 2 verarbeitet wurde.

In der Tabelle 2 sind erfindungsgemäße Masterbatchansätze auf der Basis von EPDM als elastomerer Träger und verschiedenen festen oder flüssigen Peroxiden angegeben, die wie im Beispiel 1 (für feste Peroxide) oder Beispiel 2 (flüssige Peroxide) angegeben verarbeitet wurden.

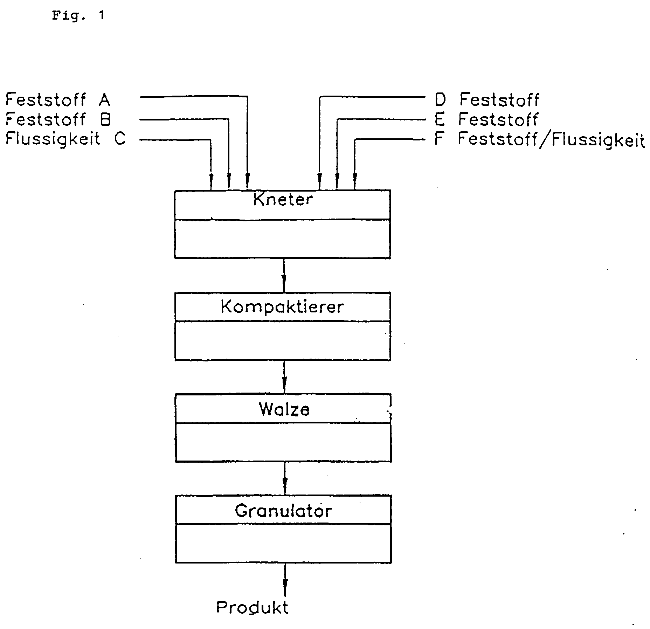

Die Figur 1 ist ein schematisches Blockfließbild des in den Beispielen 1 oder 2 durchgeführten Verfahrens (die Buchstaben beziehen sich auf die in Tabelle 2 angegebenen Komponenten).

**Tabelle 1**

| auf Basis EVA | DYBP-35-MB2 |
|---|---|
| Levapren^{R} 400 | 22 % |
| Vestenamer^{R} 6213 | 11 % |
| Marlican^{R} | 1 % |
| Socal^{R} U 1 | 14,35 % |
| Kieselsäure HDK | 15,35 % |
| DYBP - 96,5 % | 36,3 % |

**Tabelle 2**

| Produkt-bezeichnung | A Buna AP (kg) | B Vestenamer (kg) | C Marlican (kg) | D Socal U 1 (kg) | E Kieselsäure (kg) | F Org. Perox. (kg) |
|---|---|---|---|---|---|---|
| DIPP-40-MB | 8.8 | 4.0 | 8.0 | 27.2 | - | DIPP-2 (fest) 32 |
| NBV-40-MB | 8.0 | 4.0 | 4.8 | 12.8 | 15.6 | NBV (flüssig) 34.8 |
| DCUP-40-MB | 9.6 | 10.4 | 5.6 | 20.8 | - | DUCP (fest) 33.6 |
| DHBP-40-MB | 8.0 | 4.0 | 2.4 | 12.4 | 17.6 | DHBP (flüssig) 35.6 |
| DYBP-40-MB | 4.0 | 12.0 | 2.4 | 12.0 | 12.0 | DYBP (flüssig) 37.6 |

### Beispiel 3

### Herstellung von DHBP-40-MB: Vergleichsbeispiele

| Ansatzgröße | | |
|---|---|---|
| Rohstoffe (g) | Beispiel 3A | Beispiel 3B |
| EPDM | 260 (10 %) | 390 (15 %) |
| trans-Polyoctenamer | 130 ( 5 %) | - - |
| Marlican | 78 ( 3 %) | 78 ( 3 %) |
| Kreide | 403 (15,5 %) | 403 (15,5 %) |
| Kieselsäure HDK | 572 (22 %) | 572 (22 %) |
| DHBP - 90 %ig | 1157 (44,5 %) | 1157 (44,5 %) |
| Gesamt (g) | 2600 (100 %) | 2600 (100 %) |

### Versuchsdurchführung für Beispiel 3A

Ein 7-l-Trogkneter wird auf 70 - 75°C erwärmt und unter Kneten die Gesamtmenge an Kautschuk und trans-Polyoctenamer sowie Marlican zugegeben. Nach ca. 0,5 h wird eine homogene Mischung erhalten. Anschließend fügt man ca. 300 g (entsprechend 1/3) o.a. Kreide-Kieselsäure-Mischung unter weiterem Kneten hinzu.

Unter Einschalten der Wasserkühlung wird der homogene Kneterinhalt auf ca. 55°C abgekühlt. Dann wird unter ständigem Kneten und Temperaturkontrolle die restliche Menge an Kreide-Kieselsäure-Mischung synchron mit dem organischen Peroxid (DHBP) so zudosiert, daß die Temperatur im Kneter nicht 55°C übersteigt.
Die erforderliche Zugabezeit beträgt ca. 0,5 h.
Der homogene Masterbatch wird auf ca. 30°C abgekühlt und noch warm aus dem Kneter ausgetragen und zum Walzfell ausgerollt.

### Beispiel 3B

Im Fall von Beispiel 3B ohne trans-Polyoctenamer wird wie in Beispiel 3A verfahren.
Bei der synchronen Zugabe des organischen Peroxids und der Kreide-Kieselsäure-Mischung zeigt sich, daß kein Zusammenhalt der Einzelkomponenten zu einer homogenen Mischung erfolgt. Der Kneterinhalt besteht aus einer bröseligen Masse, von der kein Walzfell angefertigt werden kann.

## Patentansprüche

1. Masterbatch-Zusammensetzung auf der Basis elastomerer Träger, umfassend ein organisches Peroxid, einen Weichmacher und einen Füllstoff und gegebenenfalls weitere mit dem organischen Peroxid kompatible Additive, dadurch gekennzeichnet, daß sie zusätzlich zum elastomeren Träger ein trans-Polyoctenamer enthalten.

2. Masterbatch-Zusammensetzung nach Anspruch 1,
**dadurch gekennzeichnet**,
daß das organische Peroxid ein Vernetzungsperoxid ist.

3. Masterbatch-Zusammensetzung nach Anspruch 1 oder 2,
**dadurch gekennzeichnet**,
daß das organische Peroxid 2,5-Dimethylhexan-2,5-di-tert.butylperoxid (DHBP), 1,1-Bis(t-butylperoxy)-3,3,5-trimethylcyclohexan (TMCH), n-Butyl-4,4-bis-(t-butylperoxy)valerat (NBV), Ethyl-3,3-bis(t-butylperoxy)butyrat (EBU), Dicumylperoxid (DCUP), 2,5-Dimethyl-2,5-di-(t-butylperoxy)hexin-3(DYBP), Di-(2-t-butylperoxy-isopropyl)benzol (DIPP), Di-(t-butyl)peroxid (DTBP) und oder t-Butylcumyl-peroxid (BCUP) ist.

4. Masterbatch-Zusammensetzungen nach einem der Ansprüche 1 bis 3,
**dadurch gekennzeichnet**,
daß sie das organische Peroxid in einer Menge von 30 bis 50 Gew.-%, bezogen auf die gesamte Masterbatch-Zusammensetzung, enthält.

5. Masterbatch-Zusammensetzung nach einem der Ansprüche 1 bis 4,
**dadurch gekennzeichnet**,
daß der elastomere Träger ein oder mehrere Elastomere ist, ausgewählt aus Acrylnitril-Butadien-Kautschuk (NBR), Chloropren-Kautschuk (CR), Butylkautschuk (IIR), Urethan-Kautschuk (AU Polyesterbasis, EU Polyesterbasis), Silicon-Kautschuk (Si), Fluorocarbon-Kautschuk (CFM, FPM), Chlorsulfoniertes Polyethylen (CSM), Acrylat-Kautschuk (ANM, ACM), Butadien-Vinylpyridin-Kautschuk (PBR), Carboxylat-Kautschuk, Epichlorhydrin-Kautschuk (CO, ECO), Propylenoxid-Kautschuk (PO), Ethylen-Vinylacetat-Copolymere (EVA), Ethylen-Propylen-Kautschuk (EPM, EPDM), Polysulfidkautschuk (TM), Thermoplastischer Kautschuk (TPE) und Polyesterkautschuk.

6. Masterbatch-Zusammensetzung nach Anspruch 5,
**dadurch gekennzeichnet**,
daß der elastomere Träger ein Ethylen-Propylen-Dien-Terpolymeres und/oder Ethylen-Vinylacetat-Copolymeres ist.

7. Masterbatch-Zusammensetzung nach einem der Ansprüche 1 bis 6,
**dadurch gekennzeichnet**,
daß sie als elastomeren Träger ein kaltfließendes Elastomer enthält.

8. Masterbatch-Zusammensetzung nach einem der Ansprüche 1 bis 7,
**dadurch gekennzeichnet**,
daß sie als Weichmacher n-Alkylbenzol enthält.

9. Masterbatch-Zusammensetzung nach einem der Ansprüche 1 bis 8,
**dadurch gekennzeichnet**,
daß sie als Füllstoff Kieselsäure und/oder Kreide enthält.

10. Masterbatch-Zusammensetzung nach einem der Ansprüche 1 bis 9,
**dadurch gekennzeichnet**,
daß sie schwermetallfrei ist.

11. Masterbatch-Zusammensetzung nach einem der Ansprüche 1 bis 10,
**dadurch gekennzeichnet**,
daß das Verhältnis elastomerer Träger/Polyoctenamer 1/3 bis 3/1 beträgt.

12. Masterbatch-Zusammensetzung nach einem der Ansprüche 1 bis 11,
**dadurch gekennzeichnet**,
daß sie den Füllstoff/ das Füllstoffgemisch in einer Menge von 25 bis 50 Gew.-%, bezogen auf die gesamte Masterbatch-Zusammensetzung, enthält.

13. Masterbatch-Zusammensetzung nach einem der Ansprüche 1 bis 12,
**dadurch gekennzeichnet**,
daß sie in granulierter Form vorliegt.

14. Verfahren zur Herstellung einer Masterbatch-Zusammensetzung nach einem der Ansprüche 1 bis 13,
**dadurch gekennzeichnet**,
daß man (a) den elastomeren Träger, das Polyoctenamer, den Weichmacher und gegebenenfalls einen Teil des Füllstoffes oder des Füllstoffgemisches homogen vermischt und danach (b) den Füllstoff oder das Füllstoffgemisch, oder gegebenenfalls die Restmenge davon, zusammen mit dem organischen Peroxid bei einer Temperatur unterhalb der Zersetzungstemperatur des Peroxids einarbeitet.

15. Verfahren nach Anspruch 14,
**dadurch gekennzeichnet**,
daß man bei Ethylen-Vinylacetat-Copolymer (EVA) als Träger und einem flüssigen Peroxid das EVA mit ca. 30 Gew.-% des flüssigen Peroxids vorquellen läßt, und dann die Verfahrensstufe (a) durchführt.

16. Verfahren nach Anspruch 14 oder 15,
**dadurch gekennzeichnet**,
daß man in Verfahrensstufe (b) bei einer Temperatur von 50 bis 60°C, vorzugsweise bei 50 bis 55°C, arbeitet.

17. Verfahren nach einem der Ansprüche 14 bis 16,
**dadurch gekennzeichnet**,
daß man die Verfahrensstufe (a) in einem Kneter durchführt.

18. Verfahren nach einem der Ansprüche 14 bis 17,
**dadurch gekennzeichnet**,
daß man die Mischung nach der Verfahrensstufe (b) zu Walzfellen verarbeitet.

19. Verfahren nach einem der Ansprüche 14 bis 18,
**dadurch gekennzeichnet**,
daß man die Mischung nach der Verfahrensstufe (b) in ein Granulat überführt.
